# EUROPEAN PATENT APPLICATION

(11) **EP 1 524 150 A1**
(43) Date of publication of application: **20.04.2005**
(21) Application number: 03256485.8
(22) Date of filing: 15.10.2003
(51) Int. Cl.: B60Q 1/34, B60R 1/12, B60Q 1/26

(54) **Auxiliary directional light device for an automobile**

(71) Applicant: Cheng, Chung-Yin, Chang-Hua Hsien (TW)
(72) Inventor: Cheng, Chung-Yin, Chang-Hua Hsien (TW)
(74) Representative: Edwards, David Harvey Lloyd (GB)

(57) **Abstract**

An auxiliary directional light device includes left and right auxiliary signal lights (2) that are to be mounted respectively on upper left and right corner portions of a windshield (33) of an automobile (3), and that are to be operated in synchronization with a main directional lighting unit of the automobile (3). The construction as such prevents light emitted by left and right headlights (35) of the automobile (3) from obscuring light emitted by the left and right auxiliary signal lights (2). Alternatively, the light device is mounted on the rear side of a rearview mirror (37).

## Description

The invention relates to a light device, more particularly to an auxiliary directional light device for an automobile.

An automobile includes an automobile body, left and right headlights mounted respectively on left and right front end portions of the automobile body, front left and right main signal lights mounted respectively on the left and right front end portions of the automobile body, and rear left and right main signal lights mounted respectively on left and right rear end portions of the automobile body. Each of the front left and right main signal lights is generally disposed at a level below a respective one of the left and right headlights.

Although the main signal lights achieve their intended purpose, since the light emitted by the left and right headlights has a brightness level that is relatively higher than that of light emitted by the front left and right main signal lights, the light emitted by the latter is easily obscured by the light emitted by the former. Furthermore, since the main signal lights are disposed relatively low, they can be easily blocked by nearby automobiles.

Therefore, the object of the present invention is to provide an auxiliary directional light device so as to overcome the aforesaid drawbacks of the prior art.

According to the present invention, there is provided an auxiliary directional light device for an automobile that has an automobile body mounted with a main directional lighting unit, and a directional lighting controller for controlling operation of the main directional lighting unit. The auxiliary directional light device comprises left and right auxiliary signal lights that are adapted to be mounted on the automobile body at a level above the main directional lighting unit and that are adapted to be coupled electrically to the directional lighting controller such that the auxiliary signal lights operate in synchronization with the main directional lighting unit.

Other features and advantages of the present invention will become apparent in the following detailed description of the preferred embodiments with reference to the accompanying drawings, of which:
Figure 1 is a perspective view showing the first preferred embodiment of an auxiliary directional light device when mounted on a front windshield of an automobile according to the present invention;
Figure 2 is an exploded perspective view of the first preferred embodiment;
Figure 3 is a perspective view to illustrate an alternative embodiment of the auxiliary directional light device;
Figure 4 is a perspective view showing the first preferred embodiment when mounted on a rear windshield of an automobile according to the present invention;
Figure 5 is a perspective view showing the first preferred embodiment when mounted on front and rear windshields of an automobile according to the present invention; and
Figure 6 is a perspective view showing the second preferred embodiment of an auxiliary directional light device incorporated in a rearview mirror of an automobile according to the present invention.

Before the present invention is described in greater detail, it should be noted that like elements are denoted by the same reference numerals throughout the disclosure.

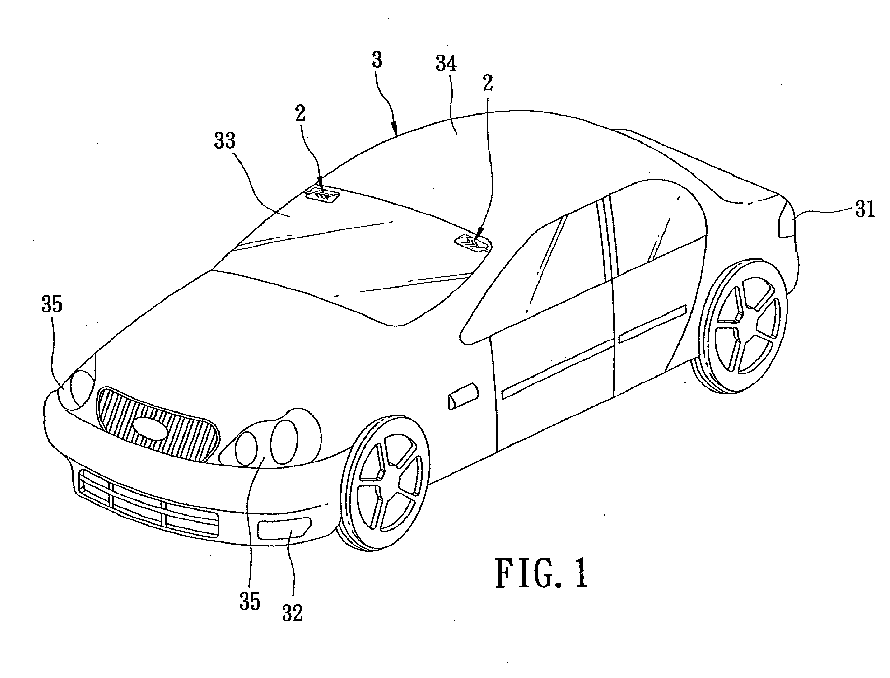

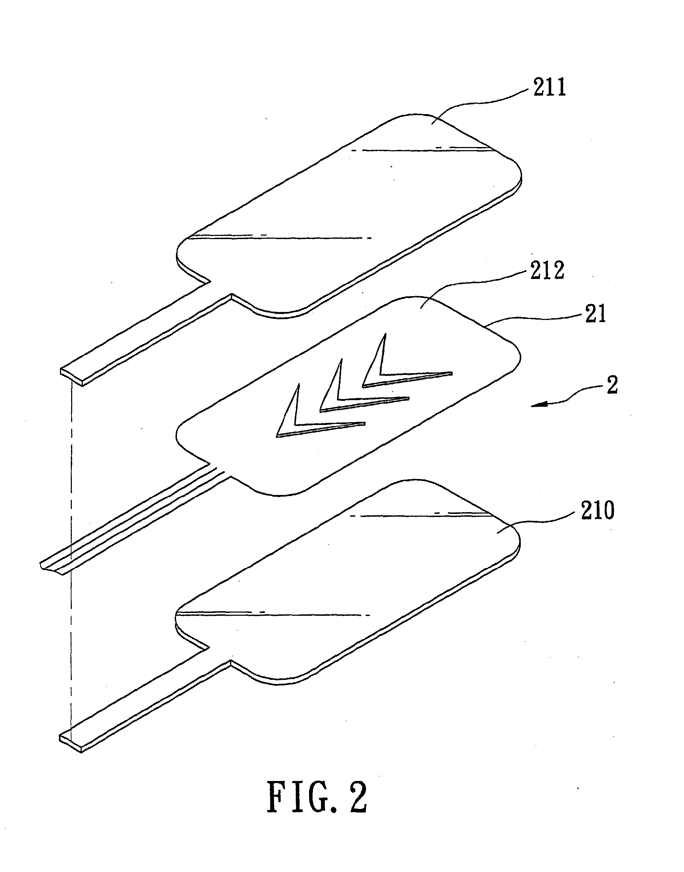

Referring to Figures 1 and 2, the first preferred embodiment of an auxiliary directional light device for an automobile 3 according to the present invention is shown to include a pair of left and right auxiliary signal lights 2.

The automobile 3 includes an automobile body 34, a main directional lighting unit, and a directional lighting controller (not shown). The automobile body 34 includes a front windshield 33 and a rear windshield (not visible). The main directional lighting unit includes front left and right main signal lights 32 (only the front left main signal light 32 is visible in Figure 1) mounted respectively on left and right front end portions of the automobile body 34, and rear left and right main signal lights 31 (only the rear left main signal light 31 is visible in Figure 1) mounted respectively on left and right rear end portions of the automobile body 34. The directional lighting controller is operable so as to control operation of the front and rear left and right main signal lights 32, 31 of the main directional lighting unit. The automobile 3 further includes left and right headlights 35 mounted respectively on the left and right front end portions of the automobile body 34, and disposed respectively at a level above the front left and right main signal lights 32.

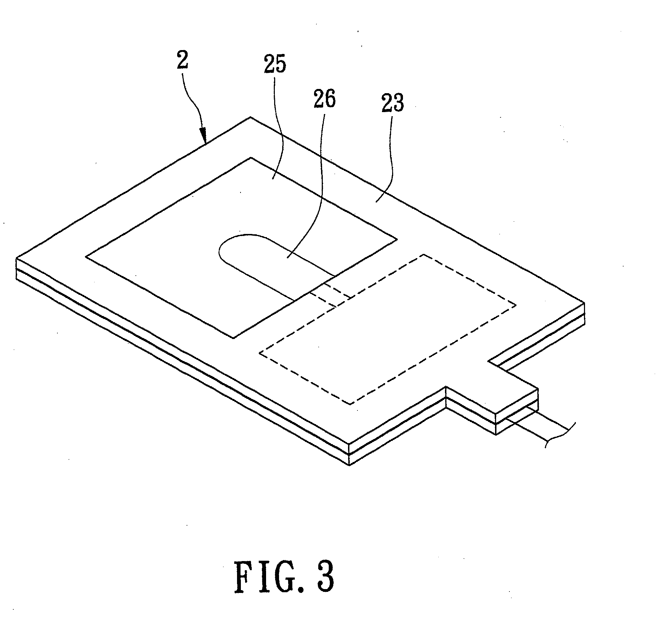

The left and right auxiliary signal lights 2 are adapted to be mounted on the automobile body 34 at a level above the main directional lighting unit. In particular, the left and right auxiliary signal lights 2 are adapted to be mounted respectively on inner surfaces of upper left and right corner portions of the front windshield 33. In this embodiment, the left and right auxiliary signal lights 2 are adapted to be coupled electrically to the directional lighting controller such that the left and right auxiliary signal lights 2 operate in synchronization with the front left and right main signal lights 32 of the main directional lighting unit. Preferably, as best shown in Figure 2, each of the left and right auxiliary signal lights 2 includes an electroluminescent plate 21 that has a phosphorescent film 212 and a pair of transparent thin films 211, 210 that are disposed respectively on opposite surfaces of the phosphorescent film 212 . Alternatively, as best shown in Figure 3, each of the left and right auxiliary signal lights 2 includes a light emitting diode 26 and a generally rectangular housing 23. The light emitting diode 26 is disposed in the housing 23. The housing 23 is formed with a window 25 that is registered with the light emitting diode 26.

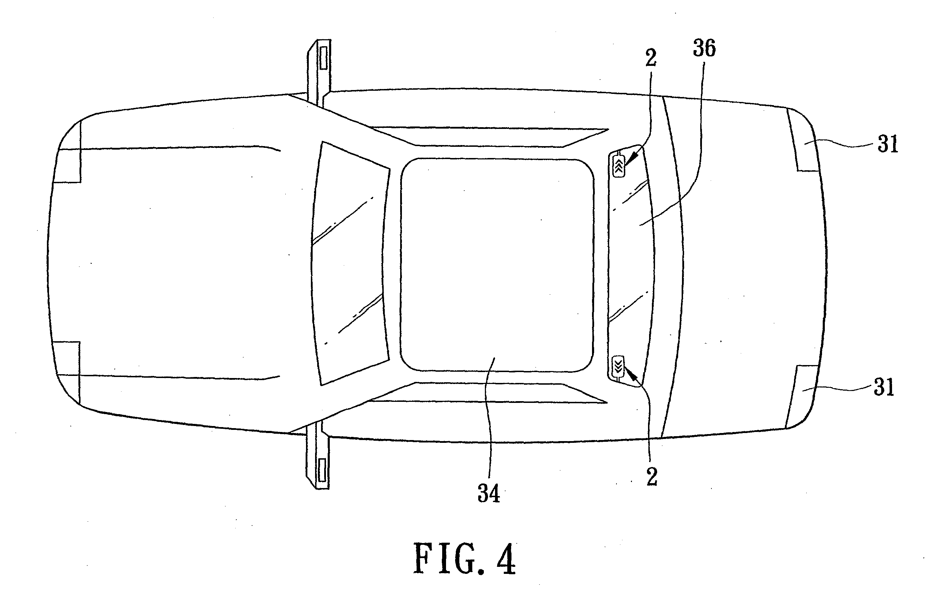

The auxiliary directional light device of this invention should not be limited for mounting on the front windshield 33 of the automobile body 34. As shown in Figure 4, the left and right auxiliary signal lights 2 may be mounted instead on inner surfaces of upper left and right corner portions of the rear windshield 36 of the automobile body 34, respectively. In this case, the left and right auxiliary signal lights 2 are adapted to be coupled electrically to the directional lighting controller (not shown) such that the left and right auxiliary signal lights 2 operate in synchronization with the rear left and right main signal lights 31 of the main directional lighting unit.

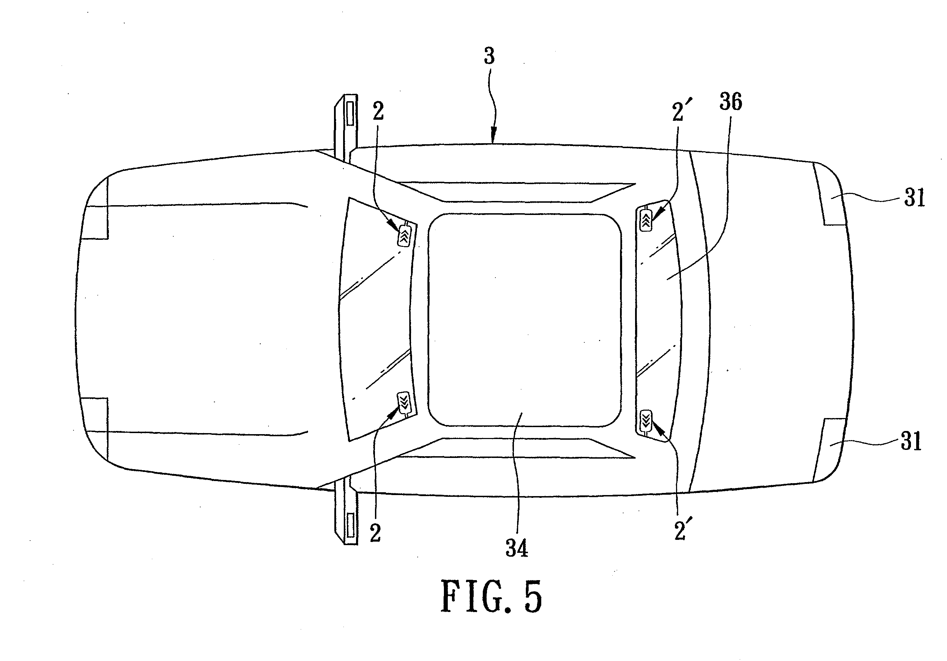

In practice, two pairs of the left and right auxiliary signal lights 2, 2' may be mounted respectively on upper left and right corner portions of the front and rear windshields 33, 36, as best shown in Figure 5. In this case, the left and right auxiliary signal lights 2 on the front windshield 33 operate in synchronization with the left and right main signal lights, whereas the left and right auxiliary signal lights 2' operate in synchronization with the rear left and right main signal lights 31 of the main directional lighting unit.

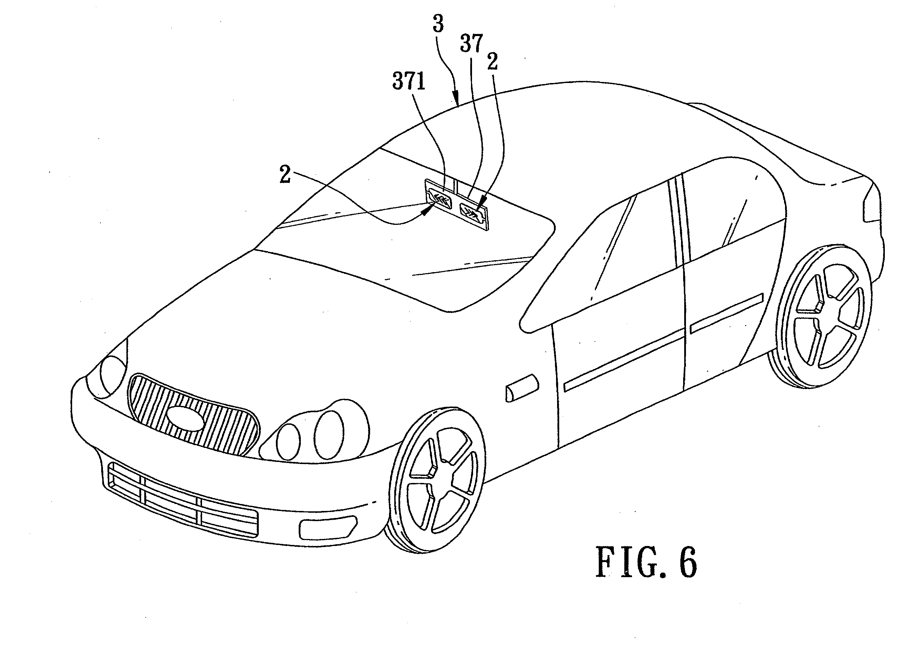

Figure 6 illustrates the second preferred embodiment of an auxiliary directional light device according to the present invention. When compared with the first preferred embodiment, the automobile 3 further includes a rearview mirror device 37 that has a mirror casing 371 with a rear side. The left and right auxiliary signal lights 2 are mounted respectively on left and right end portions of the rear side of the mirror casing 371 of the rearview mirror device 37.

It has thus been shown that auxiliary directional light device of this invention includes left and right auxiliary signal lights 2 that are mounted higher than the headlights 35. The construction as such prevents light emitted by the left and right auxiliary signal lights 2 from being affected by light emitted by the left and right headlights 35, and from being easily blocked by nearby automobiles, thereby overcoming the aforesaid drawbacks of the prior art.

## Claims

1. An auxiliary directional light device for an automobile (3) having an automobile body (34) mounted with a main directional lighting unit, and a directional lighting controller for controlling operation of the main directional lighting unit, said auxiliary directional light device **characterized by**:
left and right auxiliary signal lights (2, 2' ) adapted to be mounted on the automobile body (34) at a level above the main directional lighting unit and adapted to be coupled electrically to the directional lighting controller such that said auxiliary signal lights (2, 2' ) operate in synchronization with the main directional lighting unit.

2. The auxiliary directional light device as claimed in Claim 1, **characterized in that** said auxiliary signal lights (2, 2') are adapted to be mounted on a windshield (33, 36) of the automobile body (34).

3. The auxiliary directional light device as claimed in Claim 1, **characterized in that** each of said auxiliary signal lights (2, 2') includes an electroluminescent plate (21).

4. The auxiliary directional light device as claimed in Claim 1, **characterized in that** each of said auxiliary signal lights (2, 2') includes a light emitting diode (26) .

5. An automobile (3) **characterized by**:
an automobile body (34) having a windshield (33 , 36) ;
a main directional lighting unit mounted on said automobile body (34);
a directional lighting controller coupled electrically to and controlling operation of said main directional lighting unit; and
an auxiliary directional light device including left and right auxiliary signal lights (2, 2') mounted on upper left and right corner portions of said windshield (33, 36) and coupled electrically to and controlled by said directional lighting controller such that said auxiliary signal lights (2, 2') operate in synchronization with said main directional lighting unit.

6. The automobile as claimed in Claim 5, **characterized in that** each of said auxiliary signal lights (2, 2') includes an electroluminescent plate (21).

7. The automobile as claimed in Claim 5, **characterized in that** each of said auxiliary signal lights (2, 2') includes a light emitting diode (26).

8. A rearview mirror device (37) for an automobile (3) having an automobile body (34) mounted with a main directional lighting unit, and a directional lighting controller for controlling operation of the main directional lighting unit, said rearview mirror device (37) **characterized by**:
a mirror casing (371) having a rear side; and
an auxiliary directional light device including left and right auxiliary signal lights (2) mounted on said rear side of said mirror casing (371) and adapted to be coupled electrically to the directional lighting controller such that said auxiliary signal lights (2) operate in synchronization with the main directional lighting unit.

9. The rearview mirror device (37) as claimed in Claim 8, **characterized in that** each of said auxiliary signal lights (2) includes an electroluminescent plate (21) .

10. The rearview mirror device as claimed in Claim 8, **characterized in that** each of said auxiliary signal lights (2) includes a light emitting diode (26).
